# EUROPEAN PATENT SPECIFICATION

(11) **EP 4 063 458 B1**
(45) Date of publication and mention of the grant of the patent: **18.09.2024**
(21) Application number: 20889123.4
(22) Date of filing: 05.11.2020
(51) Int. Cl.: C09C 1/56, C09C 3/04, C09D 17/00, C09D 11/322, C09B 67/08, C09B 67/20

(54) **METHOD FOR PRODUCING PIGMENT COMPOSITION**
VERFAHREN ZUR HERSTELLUNG EINER PIGMENTZUSAMMENSETZUNG
PROCÉDÉ DE FABRICATION DE COMPOSITION DE PIGMENT

(30) Priority: 21.11.2019 JP 2019210438
(43) Date of publication of application: 28.09.2022
(73) Proprietor: DIC Corporation, Tokyo 174-8520 (JP)
(72) Inventor: NAITO, Wakana, Kitaadachi-gun, Saitama 362-8577 (JP); HOTATE, Shoichi, Kitaadachi-gun, Saitama 362-8577 (JP); SUGO, Kenji, Kitaadachi-gun, Saitama 362-8577 (JP); GANBAYASHI, Hideki, Kitaadachi-gun, Saitama 362-8577 (JP)
(74) Representative: Kraus & Lederer PartGmbB
(86) International application number: PCT/JP2020/041274
(87) International publication number: WO 2021/100468

(56) References cited:
- WO-A2-2009/075802
- JP-A- 2000 516 656
- JP-A- H04 501 128
- JP-A- H1 036 738
- US-A1- 2017 292 036

## Description

### Technical Field

The present invention relates to a method for producing a pigment composition.

### Background Art

Pigment compositions are used in a variety of printing such as inkjet printing. As a method for producing a pigment composition, it is known to process a raw material composition containing a pigment component and a liquid medium with a dispersing machine to obtain a pigment composition (for example, see PTL 1 below).

US 2017/292036 A1 describes an aqueous pigment dispersion containing a pigment, hydrophilic fumed silica, and an aqueous medium; an ink jet recording ink containing such an aqueous pigment dispersion; and a printed article using the aqueous pigment dispersion. The average particle size of the hydrophilic fumed silica is preferably not more than 250 nm. The amount of the hydrophilic fumed silica is preferably in the range of 20 to 300 mass % relative to the amount of the pigment. The amount of the pigment is preferably in the range of 0.5 to 30 mass % relative to the amount of the whole aqueous pigment dispersion.

WO 2009/075802 A2 describes a method of preparing a pigment composition comprising the steps of combining at least one polyamine, at least one pigment, and at least one polymer having at least one carboxylic acid group or salt thereof. Various embodiments of this method are described. The document further describes a pigment composition and uses thereof, such as inkjet ink compositions.

JP H04 501128 A describes a process for the preparation of pigmented ink jet inks comprising: a) mixing at least one pigment and at least one pigment dispersant in a dispersant medium to form a pigmented ink mixture wherein pigment is present in an amount up to 60 % by weight based on the total weight of the mixture; b) deflocculating the pigmented ink mixture by passing the pigmented ink mixture through at least a plurality of nozzles within a liquid jet interaction chamber at a liquid pressure of at least 1,000 psi to produce a substantially uniform dispersion of pigment particles in the dispersant medium.

JP 2000 516656 A describes an ink jet ink comprised of water, pigment, a water immiscible organic compound exhibiting a high boiling point, and a water miscible compound. The combination of the water immiscible compound and the water miscible compound is said to provide for excellent anti-crusting properties, and provide an ink which upon printing makes a round dot, and which printed images exhibit excellent water-fastness, light-fastness and wet rub resistance.

JP H10 36738 A relates to the problem to provide a process for producing an ink composition for ink-jet recording composed of at least a pigment, a solvent and a pigment dispersing agent and to obtain an ink composition for ink-jet recording produced by the process. As a solution to the problem, the document describes a process for the production of an ink composition which comprises the ejection of a solution containing at least a pigment, a solvent and a pigment dispersing agent through two nozzles at the same pressure and acceleration to effect the opposite collision of the jets at least once and joining the jet streams, thereby crushing and pulverizing the pigment particles by the collision force. The liquid channels from the nozzles to the joining part are curved to decrease the energy loss caused by the collision of the solution on the wall surface of the channel. The ink composition for ink-jet recording contains the pigment finely pulverized by this process.

### Citation List

### Patent Literature

PTL 1: Japanese Unexamined Patent Application Publication No. 2001-262038

### Summary of Invention

### Technical Problem

A pigment composition is required to have fewer coarse particles in terms of suppressing clogging of an ejection nozzle in printing and ensuring high ejection stability.

To reduce the number of coarse particles, it is effective to subject a raw material composition containing a pigment, a pigment dispersion resin, and a liquid medium to dispersion processing for a long time or repeatedly feed the raw material composition into a dispersing machine for processing.

The methods described above, however, may fail to improve the production efficiency of pigment compositions, inks, and the like in some cases.

An object of the present invention is to provide a method for producing a pigment composition that can achieve both a reduction in the number of coarse particles that may be contained in the pigment composition and improvement in the production efficiency of the pigment composition.

### Solution to Problem

The present invention provides the method for producing a pigment composition defined in claim 1. Preferred embodiments of the invention are defined in dependent claims 2 to 7.

### Advantageous Effects of Invention

The method for producing a pigment composition of the present invention can achieve both a reduction in the number of coarse particles with a particle size of 1.0 um or more that may be contained in the pigment composition and improvement in the production efficiency of the pigment composition.

### Brief Description of Drawings

FIG. 1 is a schematic cross section illustrating an example of a rotor-stator processing machine.
FIG. 2 is a schematic side view illustrating an example of a stator in the rotor-stator processing machine.
FIG. 3 is a schematic diagram for explaining a crushing process or a cracking process in the rotor-stator processing machine.

### Description of Embodiments

Embodiments of the present invention will be described in detail below. However, the present invention is not limited to the following embodiments and can be modified in various ways and carried out without departing from the invention.

In the present description, a numerical range denoted by "to" refers to a range including numerical values provided before and after "to" as the minimum value and the maximum value. In numerical ranges provided in stages in the present description, the upper limit value or the lower limit value of a numerical range in a certain stage may be combined as appropriate with the upper limit value or the lower limit value of a numerical range in another stage. In a numerical range provided in the present description, the upper limit value or the lower limit value of the numerical range may be replaced by a value listed in Examples. "A or B" is intended to include at least one of A and B and may include both. Materials illustrated by example in the present description can be used singly or in combination of two or more unless otherwise specified. If a plurality of substances corresponding to a component are contained in a composition, the amount of the component in the composition means the total amount of these substances contained in the composition, unless otherwise specified. The word "step" is not limited to an independent step and encompasses a step that is not clearly distinguishable from another step as long as the step achieves an intended effect. "(Meth)acrylic acid" refers to a generic name of acrylic acids and corresponding methacrylic acids, and the same applies to other similar expressions such as "(meth)acrylate".

The method for producing a pigment composition of the present invention is defined in claim 1 and is a method producing a pigment composition in which a pigment is dispersed in a liquid medium by a pigment dispersion resin by undergoing step 1 in which a raw material composition containing the pigment, the pigment dispersion resin, and the liquid medium is processed with a dispersing machine. In this case, the dispersing machine is a dispersing machine including a configuration allowing the raw material compositions to collide with each other as further defined in claim 1. The method for producing a pigment composition of the present invention can achieve both a reduction in the number of coarse particles with a particle size of 1.0 um or more that may be contained in the pigment composition in which the pigment is dispersed in the liquid medium by the pigment dispersion resin and improvement in the production efficiency of the pigment composition. In producing a pigment composition, in general, a dispersing machine including a configuration allowing the raw material composition to collide with a hard body can be used, but it is preferable to use the dispersing machine including a configuration allowing the raw material compositions to collide with each other either alone or in combination with another dispersing machine in order to avoid wear in the hard body when used for a long time, to obtain a pigment composition achieving an excellent pulverization capability to reduce the number of coarse particles, and with excellent preservation stability, or to obtain a pigment composition that can produce printed matter with higher printing density.

As described above, the pigment composition refers to the pigment dispersed or dissolved in the liquid medium such as water (e.g., aqueous pigment dispersion) by the pigment dispersion resin. The pigment composition may be used for a material for producing ink or the pigment composition itself may be used as ink. The pigment composition is preferably used for printing ink or to produce the printing ink, for example, and is more preferably used for inkjet printing ink or to produce the inkjet printing ink.

When the pigment composition is used for the production of the inkjet printing ink, the pigment composition has a solid content ratio with respect to the total amount of the pigment composition preferably in the range of 1 mass% to 50 mass% and more preferably in the range of 10 mass% to 30 mass%.

Among the above dispersing machines, as the dispersing machine including a configuration allowing the raw material compositions to collide with each other, there is used a dispersing machine including a configuration allowing the raw material compositions to collide with each other at an oblique angle in order to achieve both a reduction in the number of coarse particles and a reduction in dispersed particle size in the pigment composition and improvement in the production efficiency of the pigment composition. More specifically, by using the dispersing machine including a configuration allowing the raw material compositions to collide with each other at an oblique angle, the number of times that the raw material composition is repeatedly fed into the dispersing machine and processed many times (what is called the number of times of passes) can be greatly reduced from approximately 10 to 30 times in the conventional method to preferably one to eight times, more preferably one to five times, and particularly preferably one to three times. In particular, when carbon black is used as a pigment component, a pigment composition achieving both a reduction in the number of coarse particles and a smaller dispersed particle diameter can be obtained with only one-time pass. The configuration allowing the raw material compositions to collide with each other at an oblique angle used in the method according to the invention is an oblique-type collision chamber. When using the dispersing machine, the raw material compositions are injected under pressure from multiple directions to allow the raw material compositions to collide with each other.

Examples of the oblique-type collision chamber include a chamber of the apparatus called "Star Burst" from Sugino Machine Limited. The oblique-type collision chamber can avoid wear of the hard body described below over long-time use and achieve better shearing force than that of a single nozzle chamber and is thus preferred in order to obtain a pigment composition achieving an excellent pulverization capability to reduce the number of coarse particles and with excellent preservation stability or to obtain a pigment composition that can produce printed matter with higher printing density.

Specifically, the apparatus called "Star Burst" from Sugino Machine Limited can be used as the dispersing machine.

The dispersing machine used in the present invention is preferably what is called a high pressure homogenizer that can apply a pressure in the range of 50 to 200 MPa when injecting the raw material composition in order to achieve both a reduction in the number of coarse particles in the pigment composition and improvement in the production efficiency of the pigment composition. The pressure is more preferably 80 to 200 MPa, further preferably 100 to 200 MPa, and particularly preferably 130 to 200 MPa. When the pigment component contains carbon black, a pigment composition with a level enabling inkjet ejection at low pressure and with excellent preservation stability can be obtained, and the longer service life of the apparatus and improvement in production volume per unit time can be easily achieved.

The raw material composition may contain a solid content such as the pigment and the pigment dispersion resin and the liquid medium and further contain additives other than those. The pigment composition can contain the same kind of components as the raw material composition. The solid concentration of the raw material composition may be 1 to 60 mass%, 10 to 50 mass%, or 15 to 40 mass% of the total amount of the raw material composition.

The raw material composition may be obtained by simply mixing the pigment, the pigment dispersion resin, and the liquid medium. In particular, the raw material composition is obtained by mixing the pigment, the pigment dispersion resin, and the liquid medium in advance with a rotor-stator processing machine or a beads mill processing machine prior to step 1 described above in order to significantly reduce the number of times the raw material composition is repeatedly many times fed into the dispersing machine and processed in step 1 described above, and as a result, to significantly improve the production efficiency of the pigment composition and the ink. The crushing means, for example, breaking an integral mass. The cracking means, for example, disintegrating an agglomeration.

Step 0, in which the pigment, the pigment dispersion resin, and the liquid medium are mixed in advance with a rotor-stator processing machine or a bead mill processing machine prior to step 1 described above, is also a step in which the pigment is crushed or cracked.

When the raw material composition containing many coarse particles is processed with the dispersing machine in step 1 described above, there is concern that inconvenience such as pipe clogging may occur in the dispersing machine. Thus, in terms of avoiding such inconvenience, it is effective to perform step 0 performing preliminary crushing or preliminary cracking as preprocessing prior to the step in which the pigment is dispersed in the liquid medium by the pigment dispersion resin using the dispersing machine in step 1.

A rotor-stator processing machine or a beads mill processing machineare used as the processing machine in step 0 described above, and the rotor-stator processing machine is preferably used because crushing or cracking of the pigment can be performed more efficiently, and as a result, the pigment composition with a reduced number of coarse particles can be efficiently produced.

In the rotor-stator processing machine, shearing force is applied to a raw material composition containing coarse particles between a rotor and a stator as described later to crush or crack the coarse particles. Thus, undergoing step 1 described above after undergoing step 0 using the rotor-stator processing machine can reduce the number of coarse particles in the pigment composition more efficiently and can further reduce the number of coarse particles with a particle size of 1.0 um or more. Undergoing step 1 described above after undergoing step 0 using the rotor-stator processing machine can suppress increase in processing time for producing a pigment composition with fewer coarse particles, thereby producing a pigment composition with fewer coarse particles with high productivity. Undergoing step 1 described above after undergoing step 0 using the rotor-stator processing machine can also reduce the number of coarse particles with a particle size of 0.5 um or more. In evaluating the reduction ratio of the number of coarse particles, the reduction ratios of the number of coarse particles determined when a raw material composition of the same composition is crushed or cracked are compared. When the pigment composition is processed by various processing machines, the performances of the processing machines can be compared using the rotational speed about 80% of the maximum rotational speed.

Undergoing step 1 described above after undergoing step 0 using the rotor-stator processing machine can efficiently reduce the number of coarse particles in the pigment composition while reducing the viscosity of the pigment composition. Undergoing step 1 described above after undergoing step 0 using the rotor-stator processing machine can reduce the particle size of a solid content in the pigment composition obtained by the crushing process or the cracking process. Undergoing step 1 described above after undergoing step 0 using the rotor-stator processing machine can provide excellent preservation stability (dispersion stability of the solid content) of the pigment composition obtained by the crushing process or the cracking process.

Undergoing step 1 described above after undergoing step 0 using the rotor-stator processing machine can achieve a higher printing density, compared under the condition that the composition of the pigment composition and the mass ratio of the pigment dispersion resin to the pigment component are the same. Undergoing step 1 described above after undergoing step 0 using the rotor-stator processing machine can achieve a high adsorption ratio of the pigment dispersion resin to the pigment component.

In the present invention, by using the raw material composition with the pigment crushed or cracked in advance using a rotor-stator processing machine or a beads mill processing machine in step 0 described above and undergoing step 1 described above, the number of coarse particles in the pigment composition can be further reduced efficiently. In addition, by using the raw material composition with the pigment crushed or cracked in advance using a rotor-stator processing machine or a beads mill processing machine in step 0 described above and undergoing step 1 described above, the time required to produce a pigment composition having desired physical properties of the solid content (the number of coarse particles, the particle size, etc.) can be reduced.

The temperature in the processing step using the processing machine in step 0 described above preferably falls within the following range in terms of easily reducing the number of coarse particles efficiently, in terms of easily reducing the time required to obtain a pigment composition having desired physical properties of the solid content (the number of coarse particles, the particle size, etc.) by undergoing step 1 described above, and in terms of accelerating dissolution of the pigment dispersion resin to easily improve the adsorption ratio of the pigment dispersion resin to the pigment component, and easily achieving excellent preservation stability. The temperature is preferably 25°C or higher, more preferably 30°C or higher, further preferably 40°C or higher, particularly preferably 50°C or higher, much preferably 55°C or higher, and extremely preferably 60°C or higher. The temperature is preferably 80°C or lower, more preferably 75°C or lower, further preferably 70°C or lower, particularly preferably 65°C or lower, and much preferably 60°C or lower. From these points of view, the temperature is preferably 25 to 80°C, more preferably 50 to 80°C, and further preferably 60 to 80°C.

The rotor-stator processing machine that can be used in step 0 described above includes a rotor having a rotatable blade and a stator having a wall arranged on the outer peripheral side of the blade. The processing machine may be any one of a crushing machine, a cracking machine, a disperser, and the like. The rotor and the stator may be those commercially available and having any shape, and those having different shapes or the same shape may be used in combination. The combination can be selected according to the properties of the raw material composition because there are differences in the transportability of the raw material composition, shear rate (miniaturization ability), and heating during miniaturization depending on the shapes. Typically, a rotor with many teeth facilitates miniaturization and generates much heat.

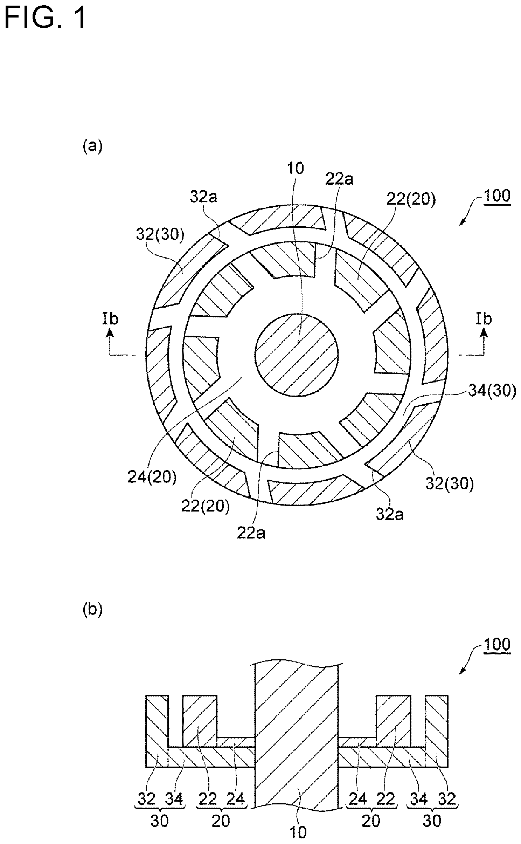

FIG. 1 (FIG. 1(a) and FIG. 1(b)) is a schematic cross section illustrating an example of a rotor-stator processing machine. A rotor-stator processing machine 100 illustrated in FIG. 1 includes a center shaft 10, a rotor 20, and a stator 30. Examples of the constituent material of the center shaft 10, the rotor 20, and the stator 30 include metal materials and ceramics.

The center shaft 10 is an elongated member and extends, for example, in the vertical direction. The center shaft 10 supports the rotor 20 and the stator 30.

The rotor 20 has an annular (for example, ring-shaped) blade 22 extending in the longitudinal direction of the center shaft 10 on the outer periphery of the rotor 20 and a connection part 24 connecting the blade 22 and the center shaft 10. The blade 22 can rotate around the center shaft 10. The blade 22 has an opening (through hole) 22a penetrating the blade 22 and, for example, has a plurality of openings 22a at intervals (for example, at equal intervals) along the peripheral direction of the blade 22. The opening direction of the openings 22a may be inclined relative to the radial direction. An end portion on the vertically upper side of each opening 22a may be open with no member of the rotor 20 arranged thereon. The number, the arrangement, and the shape of the openings 22a are not limited to particular examples.

The arrangement and the shape of the blade in the rotor of the rotor-stator processing machine are not limited to particular examples. For example, the blade is not limited to an annular member arranged on the outer periphery of the rotor and may have a shape extending from the center to the outer periphery of the rotor. The rotor may have a plurality of blades having a shape extending from the center to the outer periphery of the rotor. The blade having a shape extending from the center to the outer periphery of the rotor may have a streamlined shape.

The stator 30 has an annular (for example, ring-shaped) wall 32 extending in the longitudinal direction of the center shaft 10 on the outer periphery of the stator 30 and a connection part 34 connecting the wall 32 and the center shaft 10. The wall 32 is arranged on the outer peripheral side of the blade 22 in the rotor-stator processing machine 100. The wall 32 has an opening (through hole) 32a penetrating the wall 32 and, for example, has a plurality of openings 32a at intervals (for example, at equal intervals) along the peripheral direction of the wall 32. The opening direction of the opening 32a may be inclined relative to the radial direction.

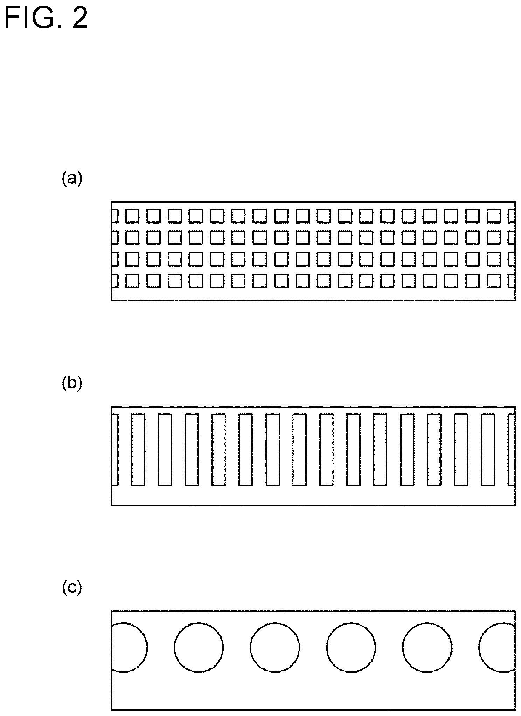

The number, the arrangement, and the shape of the opening of the wall in the stator are not limited to particular examples. FIG. 2 is a schematic side view illustrating an example of a stator (the wall of the stator) in the rotor-stator processing machine. Examples of the wall of the stator include a wall having openings (for example, openings in a quadrangular shape such as a square) arranged in an array (FIG. 2(a)), a wall having a plurality of rectangular openings arranged in a row (FIG. 2(b)), and a wall having a plurality of circular (for example, exact circle) openings arranged in a row (FIG. 2(c)). Examples of the shape of the openings include quadrangular shapes (square, rectangle, etc.) and circular shapes (exact circle, oval, etc.).

The stator may have a plurality of annular (for example, ring-shaped) walls extending in the longitudinal direction of the center shaft on the outer periphery of the stator. For example, the stator may include the wall 32 as a first wall, may include a second wall arranged on the outer peripheral side of the first wall in the rotor-stator processing machine, and may further include a third wall arranged on the outer peripheral side of the second wall in the rotor-stator processing machine. The number of walls is not limited to a particular number and may be four or more.

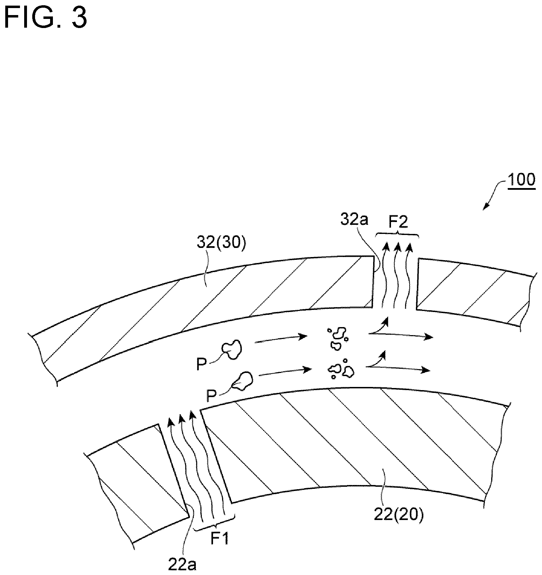

FIG. 3 is a schematic diagram for explaining the crushing process or the cracking process in the rotor-stator processing machine and illustrates a partially enlarged view of the outer peripheral portion of the rotor-stator processing machine 100 illustrated in FIG. 1. In the rotor-stator processing machine 100, for example, a raw material composition containing a pigment component and a liquid medium is supplied to the periphery of the center shaft 10, and thereafter, as illustrated in FIG. 3, the raw material composition passes through the opening 22a (in the drawing, a channel F1) in the blade 22 of the rotor 20 to reach a space between the blade 22 and the wall 32 of the stator 30. In this space, the shear force generated by the rotational motion of the blade 22 is applied to coarse particles P (solid content) to crush or crack the coarse particles P. Then, a part of the composition containing the crushed or cracked particles flows to the outer peripheral side of the wall 32 through the opening 32a of the wall 32 (in the drawing, a channel F2), and the rest of the composition further moves through the space between the blade 22 and the wall 32, where the particles are further crushed or cracked by the shear force. The pigment component in the raw material composition containing the pigment component and the liquid medium is thus crushed or cracked by the crushing process or the cracking process in the rotor-stator processing machine 100.

The shear rate (miniaturizing ability) applied by a processing unit including the rotor and the stator is preferably 50000 s⁻¹ or higher, more preferably 75000 s⁻¹ or higher, further preferably 90000 s⁻¹ or higher, particularly preferably 100000 s⁻¹ or higher, much preferably 120000 s⁻¹ or higher, extremely preferably 150000 s⁻¹ or higher, and even more preferably 170000 s⁻¹ or higher in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition. The upper limit of the shear rate may be, for example, 400000 s⁻¹ or lower and may be 250000 s⁻¹ or lower. From these points of view, the shear rate is preferably 50000 to 400000 s⁻¹. The shear rate [s⁻¹] can be determined by dividing the circumferential speed [m/s] of the blade of the rotor by the gap [m] between the blade and the wall of the stator.

The rotor-stator processing machine may have a plurality of processing units (crushers or crackers) each including a rotor and a stator. Feeding the raw material composition from a processing unit having a low shear rate to a processing unit having a high shear rate tends to suppress clogging and facilitates efficient reduction of the number of coarse particles. The rotor-stator processing machine may have a plurality of processing units (may have a multistage processing unit) along the center shaft extending in the vertical direction. When the rotor-stator processing machine has a plurality of processing units along the center shaft, it is preferable to arrange a processing unit having a higher shear rate as it is closer to the vertically lower side, in terms of easily reducing the number of coarse particles efficiently.

The rotor-stator processing machine may be an in-line processing machine or a batch processing machine. In the in-line processing machine, the raw material composition is continuously supplied. For example, the processing machine may be installed in the middle of a processing path (for example, a crushing process path and a cracking process path; for example, a pipe) to continuously process the raw material composition (the crushing process or the cracking process). In the in-line processing machine, since the entire raw material composition is forced to pass through the processing machine, the entire raw material composition can be easily processed uniformly in a short time, compared with a batch processing machine that processes only the raw material composition around the rotor. The in-line processing machine can easily reduce the number of coarse particles efficiently and therefore can easily suppress pipe clogging in the processing machine used in step 0 described above. In particular, the use of the in-line processing machine as the rotor-stator processing machine can more effectively reduce the number of coarse particles having a diameter of 0.5 um or more in the final pigment composition, compared with when the batch processing machine is used alone. The in-line processing machine easily reduces the viscosity of the pigment composition. In the in-line processing machine, the raw material composition may be circulated. In the batch processing machine, the raw material composition is intermittently supplied, and the raw material composition is refilled in each process (crushing process or cracking process).

Examples of the rotor-stator processing machine include the apparatus called "magic LAB" from IKA Japan K.K. (in-line, maximum circumferential speed: 41 m/s, maximum rotational speed: 26000 rpm); the apparatus called "VERSO" from Silverson Nippon Limited (high shear in-line mixer, in-line, maximum circumferential speed: 20 m/s, maximum rotational speed: 10000 rpm); and the apparatus called "L5M-A" from Silverson Nippon Limited (batch, maximum circumferential speed: 20 m/s, maximum rotational speed: 10000 rpm). As a processing machine from IKA Japan K.K., a processing machine including UTR module (ULTRA-TURRAX), DR module (DISPAX-REACTOR), MK module, MKO module, or CMX module can be used. The DR module has three stages of processing units (stages) each including a rotor and a stator and can easily reduce the number of coarse particles efficiently, because the shear rate can be adjusted by a combination of rotors and stators. For example, when 2P/4M/6F processing units are used in order from the vertically upper side, the processing units can be arranged such that the shear rate increases toward the vertically lower side.

The rotor-stator processing machine preferably has a rotational speed in the range of 1000 to 30000 rpm, more preferably in the range of 3000 to 25000 rpm, and particularly preferably in the range of 8000 to 20000 rpm, in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition.

The rotor-stator processing machine preferably has a circumferential speed in the range of 5 m/s to 50 m/s rpm, more preferably in the range of 10 m/s to 40 m/s, and particularly preferably in the range of 15 m/s to 35 m/s, in terms of easily reducing the number of coarse particles efficiently, in terms of easily reducing the particle size of the solid content after processing, in terms of easily reducing the viscosity of the pigment composition, and in terms of easily achieving excellent preservation stability of the pigment composition.

The manufacturing apparatus for a pigment composition according to the present embodiment may have any raw material supply unit that can supply the raw material composition to the rotor-stator processing machine. The raw material supply unit may be, for example, a pipe and a pump supplying the raw material supply unit.

The beads mill dispersing machine may be, for example, paint shakers, beads mills, sand mills, basket mills, dyno mills, SC mills, nano mills, spike mills, agitator mills, etc.

The pigment component may be at least one selected from the group consisting of pigments and pigment derivatives.

The pigments may be inorganic pigments or organic pigments. Examples of the inorganic pigments include iron oxide, carbon black (for example, carbon black produced by known methods such as a contact process, a furnace process, and a thermal process), and titanium oxide. Example of the organic pigments include azo pigments (insoluble azo pigments (monoazo pigments, disazo pigments, pyrazolone pigments, etc.), benzimidazolone pigments, betanaphthol pigments, naphthol AS pigments, condensed azo pigments, etc.), polycyclic pigments (quinacridone pigments, perylene pigments, perinone pigments, anthraquinone pigments, dioxazine pigments, thioindigo pigments, isoindolinone pigments, isoindoline pigments, quinophthalone pigments, diketopyrrolopyrrole pigments, etc.), phthalocyanine pigments, dye chelates (basic dye chelates, acid dye chelates, etc.), nitro pigments, nitroso pigments, and aniline black. These inorganic and organic pigments can be used suitably in the production of printing inks (for example, inkjet printing inks). The pigments can be used alone or in combination of two or more.

The carbon black may be #2300, #980, #960, #900, #52, #45L, #45, #40, #33, MA100, MA8, MA7, and the like available from Mitsubishi Chemical Corporation; Regal series, Monarch series, and the like available from Cabot Corporation; and Color Black FW1, Color Black series, Printex series, Special Black series, NIPEX series, and the like available from Orion Engineered Carbons SA.

The pigments may be yellow pigments such as C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, and 185.

The pigments may be magenta pigments such as C.I. Pigment Red 5, 7, 12, 48 (Ca) , 48 (Mn), 57 (Ca), 57:1, 112, 122, 123, 146, 149, 150, 168, 176, 184, 185, 202, 209, 213, 269, and 282.

The pigments may be cyan pigments such as C.I. Pigment Blue 1, 2, 3, 15, 15:1, 15:2, 15:3, 15:4, 15:6, 16, 22, 60, 63, and 66.

The pigments may be orange pigments such as C.I. Pigment Orange 5, 13, 16, 17, 34, 36, 43, 51, 64, and 71.

The pigments may be violet pigments such as C.I. Pigment Violet 1, 3, 5:1, 16, 19, 23, and 38.

The pigments may be green pigments such as C.I. Pigment Green 1, 4, 7, 8, 10, 17, 18, 36, 50, and 58.

The pigments may be dry pigments (pigments in the form of dry powder) or wet pigments (pigments in the form of wet cake). The magenta pigments are preferably wet pigments in terms of easily reducing the number of coarse particles efficiently, and in terms of easily reducing the time required to obtain a pigment composition having the desired physical properties of the solid content (the number of coarse particles, the particle size, etc.) by undergoing step 1 described above. The cyan pigments are preferably dry pigments in terms of easily reducing the number of coarse particles efficiently, and in terms of easily reducing the time required to obtain a pigment composition having the desired physical properties of the solid content (the number of coarse particles, the particle size, etc.) by undergoing step 1 described above. The pigments may be a mixture or a solid solution including two or more pigments.

The pigment derivatives may be compounds in which a functional group is introduced into a pigment. Examples of the pigment that yields a pigment derivative include phthalocyanine pigments, azo pigments, anthraquinone pigments, quinacridone pigments, and diketopyrrolopyrrole pigments. Examples of the functional group include carboxy groups, sulfo groups, amino groups, nitro groups, acid amide groups, carbonyl groups, carbamoyl groups, phthalimide groups, and sulfonyl groups. The pigment derivatives can impart dispersion stability to the pigment composition or the ink to enable prevention of formation of coarse particles over time and prevention of sedimentation of the pigment component over time.

The primary particle size of the pigment component is preferably 1.0 um or less and more preferably 0.01 to 0.5 um in terms of suppressing sedimentation of the pigment component over time even more effectively. The primary particle size refers to the value of the number-average particle size measured using a transmission electron microscope (TEM).

The amount of the pigment component is preferably 1 to 50 mass%, more preferably 10 to 30 mass%, and further preferably 15 to 25 mass% of the total amount of the raw material composition. In these cases, moderate fluidity can be easily achieved to enable efficient and uniform processing in each process, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

Examples of the liquid medium include aqueous media (such as water) and organic solvents. When a high pressure homogenizer is used as the dispersing machine used in the present invention, it is preferable to use a high-boiling solvent (for example, a solvent with a boiling point of 100°C or higher), considering that a high pressure is applied.

Examples of the water include pure water such as ion exchange water, ultrafiltered water, reverse osmosis water, and distilled water; and ultrapure water. It is preferable to use water sterilized by UV irradiation, hydrogen peroxide addition, or the like as the water, in terms of preventing growth of fungi or bacteria in long-term storage of the pigment composition or the ink.

The water is preferably used in the range of 10 to 90 mass% of the total amount of the liquid medium contained in the pigment composition of the present invention, and preferably used in the range of 15 to 80 mass% in producing an aqueous ink.

The organic solvents may be water-soluble organic solvents. The water-soluble organic solvents can easily wet the surface of the pigment component efficiently, so that the resin component (for example, resin neutralized product) dissolved in water is easily adsorbed on the pigment component, and the time required to reach the desired physical properties is easily reduced.

Examples of the water-soluble organic solvents include glycols such as ethylene glycol, diethylene glycol, triethylene glycol, tetraethylene glycol, propylene glycol, dipropylene glycol, tripropylene glycol, polyethylene glycol, and polypropylene glycol; diols such as butanediol, pentanediol, and hexanediol; glycol esters such as propylene glycol laurate; diethylene glycol ethers such as diethylene glycol monoethyl, diethylene glycol monobutyl, diethylene glycol monohexyl, and carbitol; glycol ethers such as cellosolve, including propylene glycol ether, dipropylene glycol ether, or triethylene glycol ether; alcohols (excluding glycols) such as methanol, ethanol, isopropyl alcohol, 1-propanol, 2-propanol, 1-butanol, 2-butanol, butyl alcohol, and pentyl alcohol; sulfolane, esters, ketones, lactones such as γ-butyrolactone; lactams such as N-(2-hydroxyethyl)pyrrolidone and 2-pyrrolidone; and glycerin and polyalkylene oxide adducts thereof. The water-soluble organic solvents can be used alone or in combination of two or more.

The amount of the water-soluble organic solvent is preferably 10 to 500 parts by mass, more preferably 15 to 200 parts by mass, and more preferably 15 to 150 parts by mass per 100 parts by mass of the pigment component contained in the raw material composition. By using the water-soluble organic solvent in the range above, the adsorption ratio of the resin component on the surface of the pigment component is improved, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). Examples of the water-soluble organic solvent that can improve the adsorption ratio include triethylene glycol, glycerin, 2-pyrrolidone, 1-(2-hydroxyethyl)-2-pyrrolidone, dipropylene glycol, propylene glycol, and 1,5-pentanediol.

When a high pressure homogenizer is used to produce the pigment composition or when the inkjet printing ink produced using the pigment composition is applied to thermal inkjet printing described later, it is preferable to use a high-boiling solvent having a boiling point of 100°C or higher as the organic solvent. The use of a high-boiling solvent having a boiling point of 100°C or higher as the organic solvent is also preferable because wetting of the pigment is accelerated and, consequently, the resin is easily adsorbed on the pigment and preservation stability is improved.

Examples of the high-boiling solvent include glycerin, 2-pyrrolidone, 1-(2-hydroxyethyl)-2-pyrrolidone, dipropylene glycol, propylene glycol, and 1,5-pentanediol.

The liquid medium is preferably a liquid medium having a dispersion term (δD¹), a polar term (δP¹), and a hydrogen bonding term (δH¹) within the following range, in order to obtain an ink that has even higher preservation stability and with which clogging of an ink ejection nozzle is less likely to occur in the initial stage of ink ejection, and to obtain a pigment composition used to produce such an ink.

The dispersion term (δD¹) of the liquid medium (a) is preferably in the range of 12 to 24, more preferably 14 to 21, and particularly preferably 16 to 19.

The polar term (δP¹) of the liquid medium (a) is preferably in the range of 4 to 17, more preferably 6 to 15, and particularly preferably 8 to 13.

The hydrogen bonding term (δH¹) of the liquid medium (a) is preferably in the range of 6 to 43, more preferably 9 to 35, and particularly preferably 9 to 30.

Examples of the liquid medium having a dispersion term (δD¹), a polar term (δP¹), and a hydrogen bonding term (δH¹) within the range above include triethylene glycol, glycerin, 2-pyrrolidone, 1-(2-hydroxyethyl)-2-pyrrolidone, dipropylene glycol, propylene glycol, and 1,5-pentanediol.

The values of the dispersion term (δD¹), the polar term (δP¹), and the hydrogen bonding term (δH¹) of the liquid medium are the values recorded in the computer software Hansen Solubility Parameters in Practice 4th Edition 4.1.07 (HSPiP).

The liquid medium having a dispersion term (δD¹), a polar term (δP¹), and a hydrogen bonding term (δH¹) in the range above is preferably used in the range of 10 to 95 mass% of the total amount of the liquid medium contained in the pigment composition, and more preferably used in the range of 50 to 80 mass%.

The liquid medium contained in the pigment composition is preferably used in the range of 30 to 98 mass% of the total amount of the pigment composition of the present invention, and preferably used in the range of 60 to 95 mass% in producing an aqueous ink.

The liquid medium used in the pigment composition of the present invention is preferably a combination of the water described above with the high-boiling solvent or the liquid medium having a dispersion term (δD¹), a polar term (δP¹), and a hydrogen bonding term (δH¹), because if so, the resin component such as a pigment dispersion resin is easily adsorbed on the surface of the pigment component. In particular, when a high pressure homogenizer is used to produce the pigment composition of the present invention or when the inkjet printing ink produced using the pigment composition is applied to thermal inkjet printing described later, a combination of the water with the high-boiling solvent or the liquid medium having a dispersion term (δD¹), a polar term (δP¹), and a hydrogen bonding term (δH¹) is preferably used as the liquid medium, because wetting of the pigment is accelerated and, consequently, the resin is easily adsorbed on the pigment and preservation stability is improved.

It is preferable that the liquid medium satisfies at least one of the followings, in terms of easily reducing the number of coarse particles efficiently, and in terms of easily reducing the time required to obtain a pigment composition having the desired physical properties of the solid content (the number of coarse particles, the particle size, etc.) by undergoing step 1 described above.
- The liquid medium preferably contains at least one selected from the group consisting of glycols, lactams, and glycerin.
- The liquid medium preferably contains at least one selected from the group consisting of triethylene glycol, triethylene glycol and dipropylene glycol.
- The liquid medium preferably contains at least one selected from the group consisting of N-(2-hydroxyethyl)pyrrolidone and 2-pyrrolidone.
- When the pigment component contains carbon black, the liquid medium preferably contains at least one selected from the group consisting of N-(2-hydroxyethyl)pyrrolidone, 2-pyrrolidone, triethylene glycol, and glycerin.
- When the pigment component contains magenta pigment, the liquid medium preferably contains at least one selected from the group consisting of 2-pyrrolidone, triethylene glycol, dipropylene glycol, and glycerin.
- When the pigment component contains cyan pigment, the liquid medium (a) preferably contains at least one selected from the group consisting of dipropylene glycol, N-(2-hydroxyethyl)pyrrolidone, 2-pyrrolidone, triethylene glycol, and glycerin.
   - When the pigment component contains yellow pigment, the liquid medium (a) preferably contains at least one selected from the group consisting of propylene glycol, N-(2-hydroxyethyl)pyrrolidone, 2-pyrrolidone, triethylene glycol, and glycerin.

The amount of the water-soluble organic solvent is preferably 10 to 500 parts by mass and more preferably 15 to 150 parts by mass per 100 parts by mass of the pigment component. In these cases, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The liquid medium is preferably used in the range of 30 to 98 mass% of the total amount of the pigment composition of the invention and preferably used in the range of 60 to 95 mass% in producing an aqueous ink.

The raw material composition may contain a resin component. Examples of the resin component include pigment dispersion resins and binder resins. The resin component may be conventionally known resins. For example, radical polymers can be used, and it is preferable to use a radical polymer having an aromatic cyclic structure or a heterocyclic structure. In this case, the resin component is easily adsorbed on the pigment component by the π-π interaction between the resin component and the pigment component, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

When a radical polymer having an anionic group is used as the resin component (for example, pigment dispersion resin), it is preferable to use a radical polymer (neutralized product) in which some or all of the anionic groups are neutralized by a basic compound. The neutralization facilitates dissolution of the resin component in the liquid medium including water, accelerates adsorption on the surface of the pigment component, and facilitates keeping a good dispersion state. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

An example of the aromatic cyclic structure or the heterocyclic structure is a cyclic structure introduced into the radical polymer by using a monomer having an aromatic cyclic structure or a heterocyclic structure. The aromatic cyclic structure is preferably a benzene ring structure and more preferably a styrene-derived structure. By using a resin component that is a radial polymer having an aromatic cyclic structure or a heterocyclic structure, adsorption of the resin component on the pigment component can be enhanced, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The radical polymer that can be used as the resin component is, for example, a polymer obtained by radical polymerization of various monomers.

The monomer may be a monomer having an aromatic cyclic structure when an aromatic cyclic structure is introduced into the resin component. The monomer may be a monomer having a heterocyclic structure when a heterocyclic structure is introduced.

Examples of the monomer having an aromatic cyclic structure include styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, α-methylstyrene, p-methyl-α-methylstyrene, vinylnaphthalene, and vinylanthracene.

Examples of the monomer having a heterocyclic structure include vinylpyridine-based monomers such as 2-vinylpyridine and 4-vinylpyridine.

When a polymer having both an aromatic cyclic structure and a heterocyclic structure is used as the radical polymer, a combination of a monomer having an aromatic cyclic structure and a monomer having a heterocyclic structure can be used as the monomer.

The resin component is preferably a radical polymer having an aromatic cyclic structure. The monomer is therefore preferably a monomer having an aromatic cyclic structure and more preferably at least one selected from the group consisting of styrene, α-methylstyrene, and tert-butylstyrene.

The amount of the monomer having an aromatic cyclic structure or a heterocyclic structure is preferably 20 mass% or more, more preferably 40 mass% or more, and further preferably 50 to 95 mass% of the total amount of monomers, in terms of further enhancing the adsorption of the resin component to the pigment component.

The monomer may be a monomer having an anionic group in terms of producing a radical polymer having an acid value in the range described below as the resin component.

Examples of the monomer having an anionic group include monomers having anionic groups, such as carboxy groups, sulfo groups, and phosphate groups. The monomer having an anionic group is preferably a monomer having a carboxy group and more preferably at least one selected from the group consisting of acrylic acid and methacrylic acid. In these cases, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The amount of the monomer having an anionic group is preferably 5 to 80 mass%, more preferably 5 to 60 mass%, and further preferably 5 to 50 mass% of the total amount of monomers that can be used to produce the resin component, in terms of easily obtaining a radical polymer having an acid value in the range described below.

In addition to the monomers mentioned above, other monomers can be used, if necessary, as the monomers that can be used to produce the resin component. Examples of the other monomers include methyl (meth)acrylate, n-propyl (meth)acrylate, isopropyl (meth)acrylate, n-butyl (meth)acrylate, sec-butyl (meth)acrylate, tert-butyl (meth)acrylate, 2-ethylbutyl (meth)acrylate, 1,3-dimethylbutyl (meth)acrylate, hexyl (meth)acrylate, 2-ethylhexyl (meth)acrylate, octyl (meth)acrylate, ethyl (meth)acrylate, n-butyl (meth)acrylate, 2-methylbutyl (meth)acrylate, pentyl (meth)acrylate, heptyl (meth)acrylate, nonyl (meth)acrylate, 3-ethoxypropyl (meth)acrylate, 3-ethoxybutyl (meth)acrylate, dimethylaminoethyl (meth)acrylate, 2-hydroxyethyl (meth)acrylate, 2-hydroxybutyl (meth)acrylate, ethyl-α-(hydroxymethyl)(meth)acrylate, dimethylaminoethyl (meth)acrylate, hydroxyethyl (meth)acrylate, hydroxypropyl (meth)acrylate, phenyl (meth)acrylate, benzyl (meth)acrylate, phenylethyl (meth)acrylate, diethylene glycol (meth)acrylate, triethylene glycol (meth)acrylate, polyethylene glycol (meth)acrylate, glycerin (meth)acrylate, bisphenol A (meth)acrylate, dimethyl maleate, diethyl maleate, and vinyl acetate. These monomers can be used alone or in combination of two or more. One of such acrylates or methacrylates may be used alone, or a combination of acrylate and methacrylate may be used as the other monomers.

The resin component may be, for example, a polymer having a linear structure formed by radical polymerization of monomers, a polymer having a branched (grafted) structure, or a polymer having a cross-linked structure. The monomer arrangement of each polymer is not limited to particular examples, and a random polymer or a block polymer can be used.

The polymer having a cross-linked structure can be produced by using a monomer having a cross-linkable functional group as the monomer. Examples of the monomer having a cross-linkable functional group include poly(meth)acrylates of polyhydric alcohols, such as ethylene glycol di(meth)acrylate, propylene glycol di(meth)acrylate, polyethylene glycol di(meth)acrylate, poly(oxyethylene oxypropylene) glycol di(meth)acrylate, tri(meth)acrylates of alkylene oxide adducts of glycerin; glycidyl (meth)acrylate; and divinylbenzene.

The resin component may be a polymer having a structural unit derived from the monomers described above, but preferably a polymer obtained by polymerization of only a monomer having an anionic group and a monomer having an aromatic cyclic structure or a heterocyclic structure.

The resin component is preferably a polymer having a styrene-derived structural unit and a (meth)acrylic acid-derived structural unit and more preferably at least one selected from the group consisting of styrene-(meth)acrylic acid copolymers and styrene-(meth)acrylic acid-based ester-(meth)acrylic acid copolymers. The polymer having a styrene-derived structural unit and a (meth)acrylic acid-derived structural unit preferably has an acid value in the range described below. The aromatic ring moiety in the styrene-derived structural unit is firmly adsorbed on the surface of the pigment component, and the carboxy group in the (meth)acrylic acid-derived structural unit has a high affinity for water, so that high dispersion stability is easily achieved. Accordingly, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The styrene-(meth)acrylic acid copolymer may be any one of styrene-acrylic acid copolymers, styrene-methacrylic acid copolymers, and styrene-acrylic acid-methacrylic acid copolymers but preferably at least one selected from the group consisting of styrene-acrylic acid copolymers and styrene-acrylic acid-methacrylic acid copolymers. In this case, the adsorbability on the pigment component and the dispersibility in water are easily adjusted. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

In the styrene-(meth)acrylic acid copolymer, the total amount of the styrene-derived structural unit, the acrylic acid-derived structural unit, and the methacrylic acid-derived structural unit is preferably 80 to 100 mass% and more preferably 90 to 100 mass% of the total amount of structural units of the styrene-(meth)acrylic acid copolymer.

The radical polymerization rates (reaction rates) of the monomers in radical polymerization are assumed to be almost the same, and the use ratio (the ratio prepared) of each monomer is assumed to be the same as the ratio of the structural unit derived from the monomer that constitutes the radical polymer.

The radical polymer can be produced, for example, by radical polymerization of the monomers by methods such as bulk polymerization, solution polymerization, suspension polymerization, and emulsion polymerization.

In producing the radical polymer, commonly known polymerization initiator, chain transfer agent (polymerization regulator), surfactant, defoamer, and the like can be used if necessary.

Examples of the polymerization initiator include 2,2'-azobis(2,4-dimethylvaleronitrile), 2,2'-azobisisobutyronitrile, 1,1'-azobis(cyclohexane-1-carbonitrile), benzoyl peroxide, dibutyl peroxide, and butyl peroxybenzoate. The amount of the polymerization initiator is preferably 0.1 to 10 mass% of the total amount of monomers used in the production of the radical polymer.

When a radical polymer obtained by solution polymerization is used, the resin component may be a radical polymer pulverized by drying and crushing after removing a solvent contained in a radical polymer solution obtained by solution polymerization. When the resin component that is a pulverized radical polymer is used in combination with a water-soluble organic solvent and a basic compound, the resin component is neutralized by the basic compound in a zeroth step, dissolves in the liquid medium containing a water-soluble organic solvent, and comes to be adsorbed on the surface of the pigment component wetted by the liquid medium. As a result, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The resin component is preferably classified by a mesh sieve with a pore size (diameter) of 1 mm or less.

The acid value of the resin component (for example, pigment dispersion resin) is preferably 60 to 300 mgKOH/g, more preferably 80 to 250 mgKOH/g, and further preferably 100 to 200 mgKOH/g. It is particularly preferable to use the resin component having an acid value of 120 to 180 mgKOH/g. In these cases, a good dispersion state is easily kept because the adsorption of the resin component on the pigment component is increased and an adequate affinity for the liquid medium (for example, a liquid medium containing water and a water-soluble organic solvent) is easily achieved. Thus, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved).

The acid value is preferably an acid value derived from the anionic group such as carboxy group, sulfo group, and phosphate group. The acid value is a numerical value measured in accordance with the Japanese Industrial Standards "K0070: 1992. Test Methods for acid value, saponification value, ester value, iodine value, hydroxyl value and unsaponifiable matter of chemical products" except that tetrahydrofuran is used instead of diethyl ether as a solvent. The acid value refers to the amount (mg) of potassium hydroxide required to completely neutralize 1 g of the resin component.

The weight-average molecular weight of the resin component (for example, pigment dispersion resin) is preferably in the range of 2000 to 40000, more preferably 5000 to 30000, even more preferably 5000 to 25000, preferably 6000 to 20000, and particularly preferably 8000 to 12000. In these cases, agglomeration with the adjoining pigment component is suppressed, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). The "weight-average molecular weight" is a value measured by gel permeation chromatography (GPC) and a value converted in terms of the molecular weight of polystyrene used as a standard substance.

The amount of the resin component (for example, pigment dispersion resin) is preferably 5 to 200 parts by mass and more preferably 10 to 100 parts by mass, per 100 parts by mass of the pigment component. With this amount, a good dispersion state is easily kept because of a sufficient affinity for the liquid medium (for example, water), and the resin component is easily adsorbed on the pigment component. Accordingly, excellent preservation stability is easily achieved so that sedimentation of the solid content in the pigment composition over time is prevented, sedimentation of the solid content in the ink over time is easily prevented, clogging of an ink ejection nozzle in the initial stage of ink ejection is easily suppressed (excellent initial ejection stability is easily achieved), and clogging of an ink ejection nozzle over time is easily suppressed (excellent long-time ejection stability is easily achieved). In addition, the amount of a free resin component that is not adsorbed on the pigment component is decreased to facilitate improvement in ink ejection performance. Furthermore, agglomeration of the pigment component due to the free resin component is easily suppressed to facilitate stabilization of ink.

The raw material composition may contain a basic compound. When the resin component has an anionic group, the basic compound neutralizes the anionic group. The neutralization of the resin component by the basic compound increases the affinity for the aqueous medium of the pigment component adsorbing the resin component. As a result, coarse particles are easily reduced, the dispersion state of the solid content in the pigment composition is easily stabilized, formation of coarse particles over time is easily prevented, and sedimentation of the solid content over time is easily suppressed.

For example, the basic compound may be an inorganic basic compound or an organic basic compound. Examples of the inorganic basic compound include hydroxides of alkali metals such as potassium and sodium; carbonates of alkali metals such as potassium and sodium; hydroxides of alkaline earth metals such as calcium and barium; and carbonates of calcium and barium. Examples of the organic basic compound include amino alcohols such as triethanolamine, N,N-dimethanolamine, N-ethylethanolamine, dimethylethanolamine, and N-butyldiethanolamine; morpholines such as morpholine, N-methylmorpholine, and N-ethylmorpholine; piperazines such as N-(2-hydroxyethyl)piperazine and piperazine hexahydrate; and ammonium hydroxide. The basic compound is preferably an alkali metal hydroxide (potassium hydroxide, sodium hydroxide, lithium hydroxide, etc.) and more preferably potassium hydroxide, because the efficiency of neutralizing the resin component is high so that the dispersion stability of the pigment component adsorbing the resin component in the aqueous medium is easily improved.

When a resin component having an anionic group is used, it is preferable to use the basic compound in such a range that the neutralization ratio of the resin component is 80 to 120%. In this case, the affinity of the neutralized resin component for the aqueous medium is enhanced, and as a result, the dispersion stability of the pigment component adsorbing the resin component in the aqueous medium is easily improved. The neutralization ratio can be calculated, for example, from the following equation.Neutralization ratio [%] = {(mass [g] of basic compound × 56 × 1000) / (acid value of resin component × equivalent of basic compound × mass [g] of resin compound)} × 100

The pigment composition according to the present embodiment can be used as an ink by dilution to a desired concentration by the liquid medium described above and/or by addition of additives such as a resin component (binder such as acrylic resin and polyurethane resin described above), a drying inhibitor, a penetrating agent, a surfactant, a preservative, a viscosity regulator, a pH regulator, a chelating agent, a plasticizer, an antioxidant, and a UV absorber. The resultant ink may be subjected to centrifugation or filtration.

Examples of the ink include paints for automobiles or construction materials; and printing inks such as inkjet printing inks, offset inks, gravure inks, flexo inks, and silk screen inks. When the ink is used as an inkjet printing ink, the amount of the pigment component in the ink is preferably 1 to 10 mass% of the total amount of the ink.

The liquid medium may be a water-soluble organic solvent in terms of preventing drying of the ink and adjusting the viscosity or concentration of the ink in a suitable range. The water-soluble organic solvent may be the water-soluble organic solvent described above as a component of the raw material composition. Examples of the water-soluble organic solvent include lower alcohols such as ethanol and isopropyl alcohol; ethylene oxide adducts of alkyl alcohols such as ethylene glycol hexyl ether and diethylene glycol butyl ether; and propylene oxide adducts of alkyl alcohols such as propylene glycol propyl ether, in terms of enhancing the penetration of the ink into a recording medium.

Examples of the drying inhibitor include glycerin, ethylene glycol, diethylene glycol, triethylene glycol, triethylene glycol mono-n-butyl ether, polyethylene glycol with a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. The drying inhibitor may be the same compound as the aforementioned water-soluble organic solvent used in the raw material composition. Therefore, when the water-soluble organic solvent is already used in the raw material composition, the water-soluble organic solvent can also serve as a drying inhibitor.

The penetrating agent can be used to improve penetration into a recording medium or to adjust a dot size on a recording medium. Examples of the penetrating agent include lower alcohols such as ethanol and isopropyl alcohol; glycol monoethers of alkyl alcohols such as ethylene glycol hexyl ether, diethylene glycol butyl ether, and propylene glycol propyl ether.

The surfactant can be used to adjust ink properties such as surface tension. Non-limiting examples of the surfactant include various anionic surfactants, nonionic surfactants, cationic surfactants, and amphoteric surfactants. At least one selected from the group consisting of anionic surfactants and nonionic surfactants is preferable. The surfactants can be used alone or in combination of two or more.

Examples of the anionic surfactants include alkylbenzene sulfonates, alkylphenyl sulfonates, alkylnaphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates. Specific examples of these include dodecylbenzene sulfonate, isopropylnaphthalene sulfonate, monobutylphenylphenol monosulfonate, monobutylbiphenyl sulfonate, and dibutylphenylphenol disulfonate.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers. Among these, at least one selected from the group consisting of polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers is preferred.

Other examples of the surfactant are silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipids, and lysolecithin.

In the pigment composition for ink obtained by the above method, it is preferable that 20 to 60 mass% of the resin component of the total amount of the resin component is adsorbed on the pigment component, because if so, the resultant pigment composition is less likely to have viscosity increased over time and has extremely high preservation stability. Here, the mass ratio of the resin component adsorbed on the pigment component to the total amount of the resin component [the mass of the resin component adsorbed on the pigment component/the mass of the total amount of the resin component] (hereinafter simply referred to as "resin adsorption ratio") refers to the value calculated by the following method.

A particle charge detector (product name: PCD-04 available from Spectris Co., Ltd.) was used to measure the streaming potential in the range of ±2500 mV between platinum electrodes of a sample cell. The pigment composition was placed in the sample cell and titrated with a titrant (0.01 N, Poly-DADMAC). The amount of charge was determined by titration based on the potential difference made by the sample cell and the movement of the moving piston (i.e., the streaming potential of the liquid). The titration was terminated when the streaming potential exceeded zero (the potential became positive). The resin adsorption ratio was obtained by dividing the amount of drop at the inflection point by the amount of drop at a streaming potential of zero and then multiplying the divided value by 100.

The resin adsorption ratio is more preferably in the range of 20 to 50 mass% and particularly preferably in the range of 25 to 40 mass% in order to produce an inkjet printing ink having extremely high preservation stability, because significant increase in viscosity over time is less likely to occur, and having fewer coarse particles of a particle size of 1.0 um or more that may be contained in the pigment composition, and capable of producing a printed matter having high color reproducibility.

### [Examples]

The present invention will be described in detail with examples below, but the present invention is not limited to these examples.

### <Production of Styrene-Acrylic Acid Copolymer A>

### (Styrene-Acrylic Acid Copolymer A)

In a reaction vessel with a stirring apparatus, a dropping apparatus, and a reflux apparatus, 100 parts by mass of methyl ethyl ketone was charged and then stirred while the reaction vessel was purged with nitrogen. Subsequently, the reaction vessel was heated, and with methyl ethyl ketone being refluxed, a mixed liquid of 77 parts by mass of styrene, 10 parts by mass of acrylic acid, 13 parts by mass of methacrylic acid, and 8 parts by mass of a polymerization catalyst (product name: V-59 from Wako Pure Chemical Industries, Ltd.) was dropwise added from the dropping apparatus over 2 hours. In the middle of dropwise addition, the temperature in the reaction vessel was kept at 80°C. After completion of dropwise addition, the reaction was allowed to continue at the same temperature for additional 25 hours. After the end of reaction, the inside of the reaction vessel was left to cool and then methyl ethyl ketone was added to produce a solution with a solid content concentration of 50 mass%. After this solution was dried, the dried product was crushed into powder of 1 mm or smaller to yield a styrene-acrylic acid copolymer A. The styrene-acrylic acid copolymer A had an acid value of 150 mgKOH/g and a weight-average molecular weight of 8800.

The weight-average molecular weight is a value measured by gel permeation chromatography (GPC) and a value converted in terms of the molecular weight of polystyrene used as a standard substance. The measurement was performed by the apparatus under the conditions below.
Liquid feeding pump: LC-9A (from Shimadzu Corporation)
System controller: SLC-6B (from Shimadzu Corporation)
Auto injector: S1L-6B (from Shimadzu Corporation)
Detector: RID-6A (from Shimadzu Corporation)
Data processing software: Sic480II data station (from System Instruments Co., Ltd.)
Column: GL-R400 (guard column) + GL-R440 + GL-R450 + GL-R400M (from Hitachi Chemical Company, Ltd.)
Elution solvent: THF (tetrahydrofuran)
Elution flow rate: 2 mL/min
Column temperature: 35°C

### (Styrene-Acrylic Acid Copolymer B)

A styrene-acrylic acid copolymer B was obtained by the same procedure as that of the styrene-acrylic acid copolymer A, except that the amount of styrene was changed to 74 parts by mass, the amount of acrylic acid was changed to 11 parts by mass, and the amount of methacrylic acid was changed to 15 parts by mass. The styrene-acrylic acid copolymer B had an acid value of 170 mgKOH/g and a weight-average molecular weight of 11000.

### <Preparation of Pigment Composition>

### (Black Pigment Composition)

### [Example A1]

First, a first raw material composition (pigment concentration: 25 mass%, solid concentration: 35 mass%) was prepared by mixing 375 g of black pigment (available from Mitsubishi Chemical Corporation, carbon black, #960, dry pigment), 150 g of the styrene-acrylic acid copolymer A, 413 g of triethylene glycol, 495 g of pure water, and 68 g of a 34 mass% aqueous potassium hydroxide solution.

Then, in step 0 described above, the first raw material composition was fed into a rotor-stator processing machine (apparatus name: magic LAB from IKA Japan K.K., 3-stage type, processing units (rotors and stators) 2P/4M/6F in order from the vertically upper side, in-line type). Then, processing at a circumferential speed of 34 m/s (shear rate: 170000 s⁻¹) and a rotational speed of 20000 rpm was performed in five passes while heating to 60°C to prepare a second raw material composition (slurry).

Then, in step 1 described above, processing to inject the second raw material compositions at a pressure of 140 MPa and to allow them to collide with each other was performed in one pass using a high pressure homogenizer (apparatus name: Star Burst from Sugino Machine Limited, oblique-type collision chamber) to yield a pigment composition.

### [Reference Example A2 - for reference and/or comparison only]

A pigment composition was prepared by the same method as in Example A1 except that processing to inject the second raw material composition at a pressure of 140 MPa and to collide it with a ball was performed in one pass using a high pressure homogenizer (apparatus name: Starburst from Sugino Machine Limited, ball-type collision chamber) instead of the high pressure homogenizer (apparatus name: Star Burst from Sugino Machine Limited, oblique-type collision chamber).

### [Reference Example A3 - for reference and/or comparison only]

A pigment composition was prepared by the same method as in Reference Example A2 except that the pressure when the second raw material composition was injected using the high pressure homogenizer (apparatus name: Starburst from Sugino Machine Limited, ball-type collision chamber) was changed from 140 MPa to 200 MPa.

### [Reference Example A4 - for reference and/or comparison only]

First, a first raw material composition was prepared by the same procedure as in Example A1.

Then, in step 0 described above, the first raw material composition was fed into a disper mixer (apparatus name: MAZELA ZZ-1000/1000S from EYELA, maximum circumferential speed: 15 m/s, maximum rotational speed: 3000 rpm).

Then, it was stirred at a circumferential speed of 12 m/s and a rotational speed of 2400 rpm for 30 minutes while heating to 60°C to yield a second pigment composition.

Then, in step 1 described above, processing to inject the second raw material composition at a pressure of 140 MPa and to collide it with a ball was performed in one pass using the high pressure homogenizer (apparatus name: Star Burst from Sugino Machine Limited, ball-type collision chamber) to yield a pigment composition.

### [Reference Example A5 - for reference and/or comparison only]

First, a first raw material composition was prepared by the same procedure as in Example A1.

Then, zirconia beads (Φ 0.3 mm) 20 times the mass of the pigment were added to the first raw material composition, which was fed into a beads mill (apparatus name: Easy Nano RMB type from IMEX Corporation, maximum circumferential speed: 15 m/s, maximum rotational speed: 2650 rpm) and was stirred at a circumferential speed of 12 m/s and a rotational speed of 2100 rpm for 30 minutes while cooling to 15°C to yield a second raw material composition.

Then, in step 1 described above, processing to inject the second raw material composition at a pressure of 200 MPa and to collide it with a ball was performed in one pass using the high pressure homogenizer (apparatus name: Star Burst from Sugino Machine Limited, ball-type collision chamber) to yield a pigment composition.

### [Example A6]

A pigment composition was prepared by the same method as in Reference Example A2 except that the pressure when the second raw material composition was injected using the high pressure homogenizer (apparatus name: Starburst from Sugino Machine Limited, oblique-type collision chamber) was changed from 140 MPa to 100 MPa.

### [Comparative Example A1]

A mixture was prepared by mixing 50 g of black pigment (available from Mitsubishi Chemical Corporation, carbon black, #960, dry pigment), 20 g of the styrene-acrylic acid copolymer A, 55 g of triethylene glycol, and 9 g of a 34 mass% aqueous potassium hydroxide solution, was then charged into a planetary mixer (apparatus name: Chemical Mixer ACM04LVTJ-B from Aicohsha Mfg. Co., Ltd.) the temperature of which was maintained at 80°C, and was kneaded at a rotational speed for spinning of 80 rotations/minute and a rotational speed for revolving of 25 rotations/minute. After a lapse of 60 minutes from when the current value of the planetary mixer showed a maximum current value, ion exchange water was fed in 4 g increments, and kneading was continued until the ion exchange water reached a total of 36 g to obtain a kneaded product. To the obtained kneaded product, 30 g of ion exchange water was fed as a diluting operation to yield a pigment composition (pigment concentration: 25 mass%, solid content concentration: 35 mass%).

### [Comparative Example A2]

A pigment composition was prepared by the same method as in Example A1 except that processing to pass the same second raw material composition as that used in Example A1 through a single nozzle chamber at a pressure of 140 MPa was performed in one pass using a high pressure homogenizer (apparatus name: Star Burst from Sugino Machine Limited, single nozzle chamber) instead of the high pressure homogenizer (apparatus name: Star Burst from Sugino Machine Limited, oblique-type collision chamber).

### [Comparative Example A3]

A pigment composition was prepared by the same method as in Comparative Example A2 except that the pressure when the second raw material composition was injected using the high pressure homogenizer (apparatus name: Starburst from Sugino Machine Limited, single nozzle chamber) was changed from 140 MPa to 200 MPa.

### [Comparative Example A4]

A pigment composition was prepared by the same method as in Reference Example A2 except the number of times of passes the second raw material composition is injected was changed from one pass to 20 passes.

### (Red Pigment Composition)

### [Example B1]

First, a first raw material composition (pigment concentration: 24 mass%, solid concentration: 28 mass%) was prepared by mixing 1500 g of red pigment (FASTOGEN SUPER MAGENTA RY WET pigment from DIC Corporation, pigment concentration: 32 mass%, wet pigment), 95 g of the styrene-acrylic acid copolymer B, 356 g of triethylene glycol, and 49 g of a 34 mass% aqueous potassium hydroxide solution.

Then, in step 0 described above, the first raw material composition was fed into a rotor-stator processing machine (apparatus name: magic LAB from IKA Japan K.K., 3-stage type, processing units (rotors and stators) 2P/4M/6F in order from the vertically upper side, in-line type). Then, processing at a circumferential speed of 34 m/s (shear rate: 170000 s⁻¹) and a rotational speed of 20000 rpm was performed in five passes while heating to 60°C to prepare a second raw material composition (slurry).

Then, in step 1 described above, processing to inject the second raw material compositions at a pressure of 200 MPa and to allow them to collide with each other was performed in one pass using the high pressure homogenizer (apparatus name: Star Burst from Sugino Machine Limited, oblique-type collision chamber) to yield a pigment composition.

### [Reference Example B2 - for reference and/or comparison only]

A pigment composition was prepared by the same method as in Reference Example A2 except that processing to inject the second raw material composition at a pressure of 200 MPa and to collide it with a ball was performed in one pass using the high pressure homogenizer (apparatus name: Starburst from Sugino Machine Limited, ball-type collision chamber) instead of the high pressure homogenizer (apparatus name: Star Burst from Sugino Machine Limited, oblique-type collision chamber).

### [Reference Example B3 - for reference and/or comparison only]

First, a first raw material composition was prepared by the same procedure as in Example B1.

Then, in step 0 described above, the first raw material composition was fed into a disper mixer (apparatus name: MAZELA ZZ-1000/1000S from EYELA, maximum circumferential speed: 15 m/s, maximum rotational speed: 3000 rpm).

Then, it was stirred at a circumferential speed of 12 m/s and a rotational speed of 2400 rpm for 30 minutes while heating to 60°C to yield a second pigment composition.

Then, in step 1 described above, processing to inject the second raw material composition at a pressure of 200 MPa and to collide it with a ball was performed in one pass using the high pressure homogenizer (apparatus name: Star Burst from Sugino Machine Limited, ball-type collision chamber) to yield a pigment composition.

### [Comparative Example B1]

A mixture was prepared by mixing 50 g of red pigment (FASTOGEN SUPER MAGENTA RY WET pigment from DIC Corporation, dry pigment), 10 g of the styrene-acrylic acid copolymer B, 40 g of triethylene glycol, and 5 g of a 34 mass% aqueous potassium hydroxide solution, was then charged into the planetary mixer (apparatus name: Chemical Mixer ACM04LVTJ-B from Aicohsha Mfg. Co., Ltd.) the temperature of which was maintained at 80°C, and was kneaded at a rotational speed for spinning of 80 rotations/minute and a rotational speed for revolving of 25 rotations/minute. After a lapse of 60 minutes from when the current value of the planetary mixer showed a maximum current value, ion exchange water was fed in 4 g increments, and kneading was continued until the ion exchange water reached a total of 36 g to obtain a kneaded product. To the obtained kneaded product, 67 g of ion exchange water was fed as a diluting operation to yield a pigment composition (pigment concentration: 24 mass%, solid content concentration: 28 mass%).

### [Comparative Example B2]

First, a first raw material composition was prepared by the same procedure as in Example B1.

Then, in step 0 described above, the first raw material composition was fed into a disper mixer (apparatus name: MAZELA ZZ-1000/1000S from EYELA, maximum circumferential speed: 15 m/s, maximum rotational speed: 3000 rpm).

Then, it was stirred at a circumferential speed of 12 m/s and a rotational speed of 2400 rpm for 30 minutes while heating to 60°C to yield a second pigment composition.

Then, in step 1 described above, processing to inject the second raw material composition at a pressure of 200 MPa and to collide it with a ball was performed in one pass using the high pressure homogenizer (apparatus name: Star Burst from Sugino Machine Limited, ball-type collision chamber) to yield a pigment composition.

Then, in step 0 described above, the first raw material composition was fed into a rotor-stator processing machine (apparatus name: magic LAB from IKA Japan K.K., 3-stage type, processing units (rotors and stators) 2P/4M/6F in order from the vertically upper side, in-line type). Then, processing at a circumferential speed of 34 m/s (shear rate: 170000 s⁻¹) and a rotational speed of 20000 rpm was performed in five passes while heating to 60°C to prepare a second raw material composition (slurry).

Then, in step 1 described above, processing to pass the second raw material composition through a single nozzle chamber at a pressure of 200 MPa was performed in two passes using the high pressure homogenizer (apparatus name: Star Burst from Sugino Machine Limited, single nozzle chamber) to yield a pigment composition.

### <Evaluation of Pigment Composition>

The number of coarse particles, the particle size, the viscosity, the preservation stability, the printing density, and the resin adsorption ratio were evaluated by the following procedure using the pigment compositions obtained in the examples and comparative examples. The results are listed in Table 1 and Table 2.

### (Number of Coarse Particles)

Using a particle size distribution measuring apparatus (Accusizer 780 APS from Particle Sizing Systems, number counting method), the number of particles with a diameter of 1.0 um or more and the number of particles with a diameter of 0.5 um or more were counted by the following procedure. The pigment composition was diluted with pure water such that the sensitivity was within a range of 1000 to 4000 particles/mL. The number of particles with a diameter of 1.0 um or more and the number of particles with a diameter of 0.5 um or more included in the diluted pigment composition were counted three times using a particle size distribution measuring apparatus. Subsequently, the mean value of values each obtained by multiplying the measured value of particle count by a dilution concentration was calculated as the number of coarse particles.

### (Particle Size)

The pigment composition was put into a cell of about 4 mL. The particle size was measured by detecting scattering light of laser light under an environment at 25°C using a NANOTRAC particle size distribution measuring apparatus "UPA150" from MicrotracBEL Corporation. The volume-average particle size (Mv), the number-average particle size (Mn), D50, D90, and D95 were measured as particle sizes.

### (Viscosity)

After 1.0 mL of the pigment composition with a pigment concentration adjusted to 13% was put into in a sample cup, the viscosity of the pigment composition was measured using a TV-20 viscometer from Toki Sangyo Co., Ltd. under an environment at 25°C.

### (Preservation Stability)

The pigment composition was sealed in a polypropylene container and stored at 60°C for one week. The respective ratios of change of the volume-average particle size (Mv), the viscosity, and the number of coarse particles with a diameter of 0.5 um before and after storage were calculated. The respective ratios of change of the volume-average particle size (Mv), the viscosity, and the number of coarse particles with a diameter of 0.5 um after storage to the volume-average particle size (Mv), the viscosity, and the number of coarse particles with a diameter of 0.5 um before storage were calculated.

Those with the ratios of change within the range of 10% were deemed to have excellent preservation stability, those with the ratios of change exceeding 10% and within 15% were deemed to have good preservation stability, and those with the ratios of change exceeding 15% were deemed to have insufficient preservation stability.

### (Printing Density)

### [Production of Inkjet Recording Ink]

Using a batch centrifugal machine (from KOKUSAN Co., Ltd.), the pigment composition was centrifuged at 25°C with a centrifugal force of 134000 G for a dwell time of 10 minutes. The supernatant was decanted to yield a purified pigment composition. The pigment composition obtained by centrifugation was mixed with 8.0 parts by mass of 2-pyrrolidone, 8.0 parts by mass of triethylene glycol monobutyl ether, 3.0 parts by mass of glycerin, 0.5 parts by mass of Surfynol 440 (from Nissin Chemical Co., Ltd.), and 47.2 parts by mass of ion exchange water to yield an aqueous inkjet recording ink. The pigment concentration of the ink produced using a black pigment composition was 2.5 mass%, and the pigment concentration of the ink produced using a red pigment composition was 3.5 mass%.

### [Production of Printed Matter]

The inkjet recording ink was charged into a cartridge of an inkjet printer ENVY4500 (from HP Inc.). Subsequently, after a cleaning function installed in the printer was run once, an image having a 100% solid portion was printed on commercially available PPC paper (available from Otsuka Corporation, product number: 10PPCHWA4N) in the plain paper/standard printing mode to produce a printed matter.

### [Measurement of Printing Density]

The color of the 100% solid portion of the printed matter was evaluated using "eXact" from X-Rite Inc., and the density of the print pattern was obtained as an evaluation value. The higher evaluation value indicates that the color is produced well (highly rated).

### (Resin Adsorption Ratio)

A particle charge detector (product name: PCD-04 available from Spectris Co., Ltd.) was used to measure the streaming potential in the range of ±2500 mV between platinum electrodes of a sample cell. The pigment composition was placed in the sample cell and titrated with a titrant (0.01 N, Poly-DADMAC). The amount of charge was determined by titration based on the potential difference made by the sample cell and the movement of the moving piston (i.e., the streaming potential of the liquid). The titration was terminated when the streaming potential exceeded zero (the potential became positive). The resin adsorption ratio was obtained by dividing the amount of drop at the inflection point by the amount of drop at a streaming potential of zero and then multiplying the divided value by 100.

**[Table 1]**

| Black | Step | Crushing method | Number of coarse particles | | Particle size (nm) | | | | | Viscosity (mPa·s) | Preservation stability | | | Printing density | Resin adsorption ratio |
|---|---|---|---|---|---|---|---|---|---|---|---|---|---|---|---|
| | | | >1.0 µm | >0.5 µm | Mv | Mn | D50 | D90 | D95 | | Mv | Viscosity | Number of coarse particles | | |
| Example A1 | 0 | Rotor-stator A (in-line) | 1000 | 11000 | 112 | 67 | 112 | 197 | 231 | 28 | -8% | 87% | -15% | 1.003 | 32% |
| | 1 | Oblique collision | 500 | 3000 | 107 | 64 | 99 | 169 | 197 | 6 | -1% | -7% | -1% | | |
| Reference Example A2* | 0 | Rotor-stator A (in-line) | 1000 | 11000 | 112 | 67 | 112 | 197 | 231 | 28 | -8% | 87% | -15% | 0.998 | 32% |
| | 1 | Ball collision | 600 | 5000 | 110 | 59 | 94 | 192 | 234 | 6 | 7% | -10% | -2% | | |
| Reference Example A3* | 0 | Rotor-stator A (in-line) | 1000 | 11000 | 112 | 67 | 112 | 197 | 231 | 28 | -8% | 87% | -15% | 0.982 | 33% |
| | 1 | Ball collision | 500 | 4000 | 97 | 63 | 88 | 150 | 177 | 6 | 3% | -1% | 4% | | |
| Reference Example A4* | 0 | Disper mixer | Not measurable | Not measurable | 236 | 73 | 162 | 368 | 746 | Not measurable | 52% | Not measurable | Not measurable | 0.951 | 16% |
| | 1 | Ball collision | 4000 | 8000 | 133 | 89 | 126 | 193 | 217 | 5 | 56% | 363% | 26% | | |
| Reference Example A5* | 0 | Beads mill | 4000 | 25000 | 119 | 73 | 110 | 181 | 2123 | 19 | 12% | 101% | 14% | 0.927 | 21% |
| | 1 | Ball collision | 500 | 4000 | 99 | 62 | 86 | 148 | 175 | 6 | 3% | -3% | -56% | | |
| Example A6 | 0 | Rotor-stator A (in-line) | 1000 | 11000 | 112 | 67 | 112 | 197 | 231 | 28 | -8% | 87% | -15% | 0.980 | 29% |
| | 1 | Oblique collision | 700 | 6000 | 100 | 64 | 94 | 159 | 185 | 6 | 6% | -2% | 16% | | |
| *for reference and/or comparison only | | | | | | | | | | | | | | | |
| Comparative Example A1 | | Planetary mixer | 500 | 3000 | 129 | 73 | 118 | 208 | 247 | 7 | 0% | 158% | -2% | 0.953 | 14% |
| Comparative Example A2 | 0 | Rotor-stator A (in-line) | 1000 | 11000 | 112 | 67 | 112 | 197 | 231 | 28 | -8% | 87% | -15% | 0.980 | 30% |
| | 1 | Single nozzle | 500 | 6000 | 100 | 60 | 94 | 156 | 179 | 7 | -2% | 8% | -11% | | |
| Comparative Example A3 | 0 | Rotor-stator A (in-line) | 1000 | 11000 | 112 | 67 | 112 | 197 | 231 | 28 | -8% | 87% | -15% | 0.981 | 31% |
| | 1 | Single nozzle | 500 | 6000 | 98 | 61 | 90 | 156 | 182 | 6 | -4% | -8% | -14% | | |
| Comparative Example A4 | 0 | Rotor-stator A (in-line) | 1000 | 11000 | 112 | 67 | 112 | 197 | 231 | 28 | -8% | 87% | -15% | 0.993 | 30% |
| | 1 | Ball collision | 500 | 4000 | 105 | 68 | 93 | 153 | 178 | 6 | 9% | -8% | 4% | | |

**[Table 2]**

| Red | Step | Crushing method | Number of coarse particles | | Particle size (nm) | | | | | Viscosity (mPa·s) | Preservation stability | | | Printing density | Resin adsorption ratio |
|---|---|---|---|---|---|---|---|---|---|---|---|---|---|---|---|
| | | | >1.0 µm | >0.5 µm | Mv | Mn | D50 | D90 | D95 | | Mv | Viscosity | Number of coarse particles | | |
| Example B1 | 0 | Rotor-stator A (in-line) | 2000 | 7000 | 235 | 154 | 223 | 338 | 389 | 41 | 8% | -5% | -46% | 0.945 | 19% |
| | 1 | Oblique collision | 80 | 400 | 128 | 76 | 116 | 203 | 242 | 8 | 6% | 3% | 6% | | |
| Reference Example B2* | 0 | Rotor-stator A (in-line) | 2000 | 7000 | 235 | 154 | 223 | 338 | 389 | 41 | 8% | -5% | -46% | 0.903 | 22% |
| | 1 | Ball collision | 100 | 400 | 129 | 75 | 107 | 187 | 221 | 16 | 9% | 10% | 8% | | |
| Reference Example B3* | 0 | Disper mixer | 4000 | 16000 | 316 | 158 | 226 | 597 | 980 | 165 | 11% | -19% | Not measurable | 0.842 | 19% |
| | 1 | Ball collision | 2000 | 9000 | 240 | 155 | 225 | 358 | 417 | 23 | 51% | 283% | Not measurable | | |
| Comparative Example B1 | - | Planetary mixer | 100 | 500 | 135 | 83 | 123 | 213 | 252 | 5 | 4% | 3% | -22% | 0.940 | 15% |
| Comparative Example B2 | 0 | Rotor-stator A (in-line) | 2000 | 7000 | 235 | 154 | 223 | 338 | 389 | 41 | 8% | -5% | -46% | 0.898 | 16% |
| | 1 | Single nozzle | 300 | 1200 | 165 | 106 | 161 | 238 | 267 | 12 | 22% | 42% | -33% | | |

| | | | | | | | | | | | | | | | |
|---|---|---|---|---|---|---|---|---|---|---|---|---|---|---|---|
| *for reference and/or comparison only | | | | | | | | | | | | | | | |

### Reference Signs List

- 10: center shaft
- 20: rotor
- 22: blade
- 22a: opening
- 24: connection part
- 30: stator
- 32: wall
- 32a: opening
- 34: connection part
- 100: rotor-stator processing machine
- F1, F2: channel

## Claims

1. A method for producing a pigment composition in which a pigment is dispersed in a liquid medium by a pigment dispersion resin by undergoing step 1 in which a raw material composition containing the pigment, the pigment dispersion resin, and the liquid medium is processed with a dispersing machine, the dispersing machine being a dispersing machine including a configuration allowing the raw material compositions to collide with each other,
wherein the dispersing machine includes a configuration allowing the raw material compositions to collide with each other is an oblique-type collision dispersing machine,
wherein the oblique-type collision dispersing machine includes a configuration allowing the raw material compositions to collide with each other at a pressure in a range of 50 to 200 MPa,
wherein the oblique-type collision dispersing machine is an oblique-type collision chamber, and
wherein the raw material composition is obtained by undergoing step 0 in which the pigment, the pigment dispersion resin, and the liquid medium are mixed with a rotor-stator processing machine or a bead mill processing machine.

2. The method for producing a pigment composition according to claim 1, wherein the mixing temperature in step 0 is 25°C or higher and 80°C or lower.

3. The method for producing a pigment composition according to claim 1 or 2,
wherein in the step 0, the pigment, the pigment dispersion resin, and the liquid medium are mixed with a rotor-stator processing machine,
the rotor-stator processing machine is an in-line processing machine or a batch processing machine,
the rotor-stator processing machine has the shear rate of 50000 s⁻¹ to 400000 s⁻¹, a rotational speed in a range of 1000 rpm to 30000 rpm and/or a circumferential speed in a range of 5 m/s to 50 m/s.

4. The method for producing a pigment composition according to any one of claims 1 to 3, wherein a solid content concentration of the raw material composition is in a range of 1 mass% to 60 mass%.

5. The method for producing a pigment composition according to any one of claims 1 to 4,
wherein the pigment dispersing resin comprises a radical polymer having an anionic group,
the pigment dispersing resin has an acid value of 60 mgKOH/g to 300 mgKOH/g,
the raw material composition further comprises an alkali metal hydroxide as a basic compound which neutralizes the anionic group of the radical polymer, and
the pigment dispersing resin has a neutralization ratio, which is defined by the following equation (1), of 80% to 120%, Neutralization ratio [%] = {(mass [g] of basic compound × 56 × 1000) / (acid value of pigment dispersing resin × equivalent of basic compound × mass [g] of pigment dispersing resin)} × 100

6. The method for producing a pigment composition according to any one of claims 1 to 5, wherein number of times the raw material composition is repeatedly fed into a dispersing machine including a configuration allowing the raw material compositions to collide with each other at an oblique angle and processed (number of times of passes) is in a range of one to eight times.

7. The method for producing a pigment composition according to any one of claims 1 to 6, wherein the pigment composition is a pigment composition for inkjet printing ink.

## Patentansprüche

1. Verfahren zur Herstellung einer Pigmentzusammensetzung, bei dem ein Pigment in einem flüssigen Medium durch ein Pigmentdispersionsharz dispergiert wird, indem Schritt 1 durchgeführt wird, bei dem eine Rohmaterialzusammensetzung, die das Pigment, das Pigmentdispersionsharz und das flüssige Medium enthält, mit einer Dispergiermaschine verarbeitet wird, wobei die Dispergiermaschine eine Dispergiermaschine ist, die eine Konfiguration aufweist, die es den Rohmaterialzusammensetzungen ermöglicht, miteinander zu kollidieren,
wobei die Dispergiermaschine eine Konfiguration aufweist, die es den Rohmaterialzusammensetzungen ermöglicht, miteinander zu kollidieren, ist eine Kollisionsdispergiermaschine vom schrägen Typ,
wobei die Kollisionsdispergiermaschine vom schrägen Typ eine Konfiguration aufweist, die es ermöglicht, dass die Rohmaterialzusammensetzungen bei einem Druck im Bereich von 50 bis 200 MPa miteinander kollidieren,
wobei die Kollisionsdispergiermaschine vom schrägen Typ eine Kollisionskammer vom schrägen Typ ist, und
wobei die Rohmaterialzusammensetzung dadurch erhalten wird, dass sie Schritt 0 unterzogen wird, in dem das Pigment, das Pigmentdispersionsharz und das flüssige Medium mit einer Rotor-Stator-Verarbeitungsmaschine oder einer Perlmühle-Verarbeitungsmaschine gemischt werden.

2. Verfahren zur Herstellung einer Pigmentzusammensetzung nach Anspruch 1, wobei die Mischtemperatur in Schritt 0 25°C oder höher und 80°C oder niedriger ist.

3. Verfahren zur Herstellung einer Pigmentzusammensetzung nach Anspruch 1 oder 2,
wobei in dem Schritt 0 das Pigment, das Pigmentdispersionsharz und das flüssige Medium mit einer Rotor-Stator-Verarbeitungsmaschine gemischt werden,
die Rotor-Stator-Verarbeitungsmaschine eine Inline-Verarbeitungsmaschine oder eine Stapelverarbeitungsmaschine ist,
die Rotor-Stator-Verarbeitungsmaschine eine Schergeschwindigkeit von 50000 s⁻¹ bis 400000 s⁻¹, eine Drehzahl im Bereich von 1000 U/min bis 30000 U/min und/oder eine Umfangsgeschwindigkeit im Bereich von 5 m/s bis 50 m/s aufweist.

4. Verfahren zur Herstellung einer Pigmentzusammensetzung nach einem der Ansprüche 1 bis 3, wobei die Konzentration des Feststoffgehalts der Rohmaterialzusammensetzung im Bereich von 1 Masse-% bis 60 Masse-% liegt.

5. Verfahren zur Herstellung einer Pigmentzusammensetzung nach einem der Ansprüche 1 bis 4,
wobei das Pigmentdispersionsharz ein radikalisches Polymer mit einer anionischen Gruppe umfasst,
das Pigmentdispersionsharz eine Säurezahl von 60 mgKOH/g bis 300 mgKOH/g aufweist,
die Rohmaterialzusammensetzung außerdem ein Alkalimetallhydroxid als basische Verbindung enthält, das die anionische Gruppe des radikalischen Polymers neutralisiert, und
das Pigmentdispersionsharz ein Neutralisationsverhältnis aufweist, das durch die folgende Gleichung (1) definiert ist, von 80 % bis 120 %,Neutralisationverhältnis [%] = ((Mass [g] der basischen Verbindung × 56 × 1000) / (Säurezahl des Pigmentdispersionsharzes × Aquivalent des basischen Verbindung × Masse [g] des Pigmentdisperionsharzes)) × 100

6. Verfahren zur Herstellung einer Pigmentzusammensetzung nach einem der Ansprüche 1 bis 5, wobei die Anzahl der wiederholten Zuführungen der Rohmaterialzusammensetzung in eine Dispergiermaschine, die eine Konfiguration aufweist, die es den Rohmaterialzusammensetzungen ermöglicht, in einem schrägen Winkel zu kollidieren, und die Verarbeitung (Anzahl der Durchgänge) in einem Bereich von eins bis acht liegt.

7. Verfahren zur Herstellung einer Pigmentzusammensetzung nach einem der Ansprüche 1 bis 6, wobei die Pigmentzusammensetzung eine Pigmentzusammensetzung für Tintenstrahldrucktinte ist.

## Revendications

1. Procédé de production d'une composition pigmentaire dans laquelle un pigment est dispersé dans un milieu liquide par une résine de dispersion de pigment, en procédant à l'étape 1 dans laquelle une composition de matières premières contenant le pigment, la résine de dispersion de pigment et le milieu liquide est traitée avec une machine de dispersion, la machine de dispersion étant une machine de dispersion comprenant une configuration permettant aux compositions de matières premières d'entrer en collision les unes avec les autres,
dans lequel la machine de dispersion comprend une configuration permettant aux compositions de matières premières d'entrer en collision les unes avec les autres est une machine de dispersion par collision de type oblique,
dans lequel la machine de dispersion par collision de type oblique comprend une configuration permettant aux compositions de matières premières d'entrer en collision les unes avec les autres à une pression comprise entre 50 et 200 MPa,
dans lequel la machine de dispersion par collision de type oblique est une chambre de collision de type oblique, et
la composition de matière première est obtenue par l'étape 0 au cours de laquelle le pigment, la résine de dispersion de pigment et le milieu liquide sont mélangés à l'aide d'une machine de traitement à rotor-stator ou d'une machine de traitement par broyage de billes.

2. Procédé de production d'une composition pigmentaire selon la revendication 1, dans lequel la température de mélange à l'étape 0 est supérieure ou égale à 25°C et inférieure ou égale à 80°C.

3. Procédé de production d'une composition pigmentaire selon la revendication 1 ou 2, dans lequel
à l'étape 0, le pigment, la résine de dispersion du pigment et le milieu liquide sont mélangés à l'aide d'une machine de traitement à rotor-stator,
la machine de traitement rotor-stator est une machine de traitement en ligne ou une machine de traitement par lots,
la machine de traitement rotor-stator a un taux de cisaillement de 50000 s⁻¹ à 400000 s⁻¹, une vitesse de rotation comprise entre 1000 tr/min et 30000 tr/min et/ou une vitesse circonférentielle comprise entre 5 m/s et 50 m/s.

4. Procédé de production d'une composition pigmentaire selon l'une des revendications 1 à 3, dans laquelle la concentration en matières solides de la composition de matières premières est comprise entre 1 % et 60 %.

5. Procédé de production d'une composition pigmentaire selon l'une des revendications 1 à 4,
dans lequel la résine de dispersion de pigment comprend un polymère radical ayant un groupe anionique,
la résine de dispersion de pigments a un indice d'acidité compris entre 60 mgKOH/g et 300 mgKOH/g,
la composition de matières premières comprend en outre un hydroxyde de métal alcalin en tant que composé basique qui neutralise le groupe anionique du polymère radical, et
la résine de dispersion de pigments a un taux de neutralisation, défini par l'équation suivante (1), de 80 % à 120 %,Taux de neutralisation [%] = ((mass [g] de composé basique × 56 × 1000) / (indice d'acidité de la résine de dispersion de pigment × équivalent de composé basique × mass [g] de résine de dispersion de pigment) × 100

6. Procédé de production d'une composition pigmentaire selon l'une des revendications 1 à 5, dans lequel le nombre de fois où la composition de matière première est introduite de manière répétée dans une machine de dispersion présentant une configuration permettant aux compositions de matière première d'entrer en collision les unes avec les autres à un angle oblique et traitée (nombre de fois de passages) est compris entre une et huit fois.

7. Procédé de production d'une composition pigmentaire selon l'une des revendications 1 à 6, dans lequel la composition pigmentaire est une composition pigmentaire pour encre d'impression à jet d'encre.
